# FASCICULE DE BREVET EUROPEEN

(11) **EP 0 476 743 B1**
(45) Date de publication et mention de la délivrance du brevet: **03.07.1996**
(21) Numéro de dépôt: 91202262.1
(22) Date de dépôt: 05.09.1991
(51) Int. Cl.: C08F 214/06, C08F 2/22, C08F 259/04

(54) **Procédé pour la production de latex plurimodaux de polymères du chlorure de vinyle**
Verfahren zur Herstellung von plurimodalen Latices aus Polyvinylchlorid
Process for the production of plurimodal latices of polyvinylchloride

(30) Priorité: 17.09.1990 BE 9000884
(43) Date de publication de la demande: 25.03.1992
(73) Titulaire: SOLVAY (Société Anonyme), B-1050 Bruxelles (BE)
(72) Inventeur: Candries, Paul, B-1850 Grimbergen (BE); Zekoll, Haimo, A-5400 Hallein (AT)
(74) Mandataire: Marckx, Frieda

(56) Documents cités:
- EP-A- 0 025 561
- FR-A- 1 318 956
- FR-A- 2 286 152

## Description

La présente invention concerne un procédé pour la production de latex plurimodaux de polymères du chlorure de vinyle. Elle concerne plus particulièrement un procédé pour la production de latex plurimodaux de polymères du chlorure de vinyle par polymérisation ensemencée en émulsion aqueuse du chlorure de vinyle qui conviennent particulièrement pour la fabrication de plastisols de faible viscosité.

Les polymères du chlorure de vinyle destinés à la fabrication de plastisols, encore appelés pâtes, se présentent habituellement sous la forme d'une poudre fine constituée de grains dont le diamètre moyen en volume est compris entre 5 et 20 µm laquelle est obtenue par broyage des cénosphères résultant du séchage par atomisation de latex de polymères du chlorure de vinyle dont les particules élémentaires présentent des diamètres moyens compris entre 0,1 et 2 microns (µm). Il est connu que des plastisols ou pâtes de qualité supérieure et de faible viscosité sont obtenus lorsqu'on fait appel à des polymères du chlorure de vinyle issus de latex plurimodaux comprenant plusieurs familles de particules élementaires dont les diamètres moyens respectifs sont compris dans l'intervalle précité. Des techniques connues pour produire des latex plurimodaux consistent, par exemple, à mélanger dans des proportions définies plusieurs latex de semence monomodaux ou encore à polymériser le chlorure de vinyle avec ensemencement au moyen de plusieurs latex de semence monomodaux. Cette dernière technique parfois appelée "multiensemencement" est illustrée, par exemple, par le document EP-A-0 025 561 dans lequel on décrit la fabrication d'un latex bimodal (c'est-à-dire à deux familles de particules élémentaires) par mise en oeuvre en des proportions spécifiques à la polymérisation en émulsion aqueuse ensemencée du chlorure de vinyle de deux latex d'ensemencement monomodaux.

Le document EP-A- 0 025 561 décrit plus précisément la mise en oeuvre d'un premier latex d'ensemencement monomodal dont les particules élémentaires présentent une dimension moyenne de 0,20 à 0,40 µm et d'un second latex monomodal d'ensemencement dont les particules élémentaires présentent une dimension moyenne de 0,02 à 0,08 µm pour produire un latex bimodal à deux familles de particules élémentaires ayant une dimension moyenne de 0,6 à 1,3 µm et de 0,08 à 0,4 µm respectivement, c'est-à-dire grossies par rapport aux particules des semences.

Les procédés de l'art antérieur pour produire des latex multimodaux présentent l'inconvénient de nécessiter la mise en oeuvre à chaque cycle de polymérisation de plusieurs latex de semence monomodaux préalablement préparés dans des étapes distinctes de celle de l'obtention du latex plurimodal destiné à la fabrication de pâtes. Ils exigent dès lors des investissements importants et laissent sérieusement à désirer sur le plan de la productivité.

La présente invention vise à procurer un procédé amélioré pour la production de latex plurimodaux de polymères du chlorure de vinyle qui ne présente pas les inconvénients précités et qui permet l'obtention de latex de polymères du chlorure de vinyle appropriés à la fabrication de plastisols de faible viscosité.

A cet effet, l'invention procure un procédé pour la production de latex plurimodaux de polymères du chlorure de vinyle par polymérisation ensemencée en émulsion aqueuse du chlorure de vinyle, caractérisé en ce qu'on initie la polymérisation en émulsion auqueuse non micellaire du chlorure de vinyle en présence d'une semence constituée d'un latex plurimodal provenant d'un cycle de polymérisation précédent.

Un effet surprenant du procédé selon l'invention réside dans le fait que l'ensemencement au moyen du latex plurimodal de polymère du chlorure de vinyle provenant d'un cycle de polymérisation précédent conduit à des latex plurimodaux dont les familles de particules élémentaires présentent des granulométries moyennes identiques à celles de la semence. En d'autres termes, une fois le latex de semence plurimodal initial préparé et le procédé de polymérisation ensemencée amorcé, il n'est plus nécessaire de produire et de stocker des latex de semence, la semence étant constituée par une portion du latex produit lors d'un cycle de polymérisation précédent. Le procédé selon l'invention procède donc en quelque sorte d'un phénomène d'autorégulation permettant la fabrication à façon de latex plurimodaux à plusieurs familles de particules élémentaires de dimension moyenne préétablie en fonction de la dimension moyenne des familles de particules élémentaires du latex d'ensemencement plurimodal d'amorçage.

Par polymères du chlorure de vinyle, on ontend désigner aux fins de la présente invention les homopolymères et les copolymères du chlorure de vinyle contenant au moins 80 % et, de préférence, 90 % en poids de chlorure de vinyle. Le procédé selon l'invention s'applique donc aussi bien à l'homopolymérisation du chlorure de vinyle qu'à sa copolymérisation avec des monomères éthyléniquement insaturés tels que, par exemple, l'acétate de vinyle. Néanmoins, il s'applique de préférence à l'homopolymérisation du chlorure de vinyle.

Par polymérisation en émulsion aqueuse non micellaire, on entend désigner la polymérisation en présence d'émulsionnant en quantité inférieure à la concentration micellaire critique.

La concentration micellaire critique d'un émulsionnant s'identifie à la concentration à laquelle correspond un changement de l'inclinaison des courbes décrivant la variation d'une propriété physique d'une solution d'émulsionnant, telle que par exemple la tension superficielle, en fonction de sa concentration en émulsionnant. La concentration micellaire critique de nombreux émulsionnants est reprise dans l'ouvrage "Polymer Handbook" édité par J. Brandrup et E.H. Immergut, second edition, 1975, II-483 à II-497.

Le taux d'ensemencement, c'est-à-dire la quantité pondérale de semence exprimée en matières sèches mise en oeuvre pour 100 parties en poids de monomère(s), n'est pas véritablement critique et est, en règle générale, compris entre 0,5 et 20 % et, de préférence, entre 1 et 10 % en poids.

Des plastisols d'excellente qualité sont obtenus lorsqu'on utilise pour les préparer des polymères du chlorure de vinyle issus de latex trimodaux.

Suivant un mode de réalisation préféré de la présente invention, on produit des latex trimodaux de polymères du chlorure de vinyle. Pour ce faire, on utilise comme semence un latex trimodal constitué de trois familles de particules élémentaires et plus particulièrement encore un latex d'ensemencement trimodal dont les trois familles de particules élémentaires présentant des diamètres moyens compris entre 0,15-0,30 µm , entre 0,45-0,60 µm et entre 1,05-1,25 µm respectivement provenant d'un cycle de polymérisation précédent.

Le mode d'obtention du latex de semence plurimodal d'amorçage n'est pas critique. Le latex de semence d'amorçage peut donc être produit de toute manière connue et appropriée, par exemple par mélange de plusieurs latex monomodaux ou par polymérisation ensemencée en présence de plusieurs latex de semence monomodaux.

Le latex de semence trimodal d'amorçage préféré est produit de préférence par mélange dans des proportions pondérales de l'ordre de 2 pour 1 d'un latex monomodal dont les particules élémentaires présentent un diamètre moyen compris entre 0,45-0,60 µm avec un latex bimodal dont les deux familles de particules élementaires présentent des diamètres moyens compris entre 0,15-0,30 µm et entre 0,85-1,20 µm respectivement.

Le latex de semence monomodal dont les particules élémentaires présentent un diamètre moyen compris entre 0,45-0,60 µm est obtenu lui-même de manière avantageuse par polymérisation ensemencée non micellaire du chlorure de vinyle sur un latex de semence monomodal dont les particules élémentaires présentent un diamètre moyen de 0,15-0,30 µm avec un taux d'ensemencement de 10 à 15 % de manière à grossir les particules de la semence sans créer de nouvelles particules. Une partie du latex monomodal ainsi obtenu peut alors servir de semence pour produire par polymérisation ensemencée non micellaire avec un taux d'ensemencement de 5 à 10 % un latex de semence bimodal dont les deux familles de particules élémentaires présentent des diamètres moyens compris entre 0,15-0,30 µm (nouvelles particules) et entre 0,85-1,20 µm respectivement (particules grossies).

Mise à part la présence d'un latex de semence plurimodal et l'initiation de la polymérisation ensemencée en présence d'émulsionnant en quantité inférieure à sa concentration micellaire critique, la polymérisation ensemencée en émulsion aqueuse du chlorure de vinyle selon le procédé de l'invention s'effectue dans les conditions usuelles de la polymérisation en émulsion aqueuse du chlorure de vinyle. C'est ainsi que la température de polymérisation se situe généralement entre 40 et 70°C et que la polymérisation s'effectue à l'intervention d'initiateurs hydrosolubles et d'agents émulsionnants, plus particulièrement d'émulsionnants anioniques, présents en quantité usuelle. A titre d'exemples d'initiateurs usuels, on peut mentionnner les peroxydes hydrosolubles, tels que les persulfates de sodium, de potassium ou d'ammonium, le peroxyde d'hydrogène, les perborates, l'hydroperoxyde de t-butyle, utilisés seuls ou en association avec un réducteur. Les initiateurs sont habituellement mis en oeuvre à raison d'environ 0,020 à 0,040 % en poids par rapport au chlorure de vinyle monomère. A titre d'exemples d'émulsionnants anioniques usuels on peut mentionner les sels de métaux alcalins d'acides gras, d'acides sulfoniques, d'acides sulfosucciniques ou encore d'esters sulfuriques. La nature de l'émulsionnant n'a aucune incidence sur la dimension moyenne des particules élémentaires. La quantité globale d'émulsionnant mise en oeuvre varie habituellement entre 0,5 et 2,5 % en poids par rapport au chlorure de vinyle monomère et, plus particulièrement, entre 0,5 et 1,5 % en poids. Comme mentionné précédemment, il est essentiel d'initier la polymérisation ensemencée en présence d'émulsionnant en quantité inférieure à sa concentration micellaire critique. Le solde de l'émulsionnant est introduit progressivement en cours de polymérisation en vue d'assurer à tout moment une protection efficace des particules de polymère. Le début d'introduction progressive du solde d'émulsionnant se situe avantageusement à un moment où le nombre de particules est fixé, autrement dit, en général lorsque le taux de conversion est compris entre 5 et 20 %, de préférence, entre 5 et 15 % et plus particulièrement aux environs de 10 %. L'introduction peut être poursuivie jusqu'à la fin de la polymérisation. Néanmoins, on s'arrange de préférence pour que la totalité de l'émulsionnant à mettre en oeuvre soit introduite avant que le taux de conversion ne dépasse 80 %.

Après polymérisation, le latex est pulvérisé mécaniquement, par exemple au moyen d'un disque centrifuge ou de gicleurs à air comprimé, dans un courant d'air chaud, de manière à provoquer l'évaporation de l'eau contenue dans chaque gouttelette. Le polymère du chlorure de vinyle sec se présente sous la forme d'une poudre constituée de sphères creuses (cénosphères) dont le diamètre moyen est compris entre 10 et 100 µm et, de préférence, entre 15 et 25 µm. Les cénosphères sont ensuite broyées mécaniquement en vue d'obtenir une poudre fine constituée de grains dont le diamètre moyen en volume est compris entre 5 et 20 µm et, de préférence, entre 8 et 13 µm.

Après broyage de manière à les réduire en poudres fines de dimension appropriée, les polymères du chlorure de vinyle issus des latex produits selon le procédé de l'invention sont utilisables pour la formulation de plastisols de faible viscosité. La formulation des plastisols se fait, de manière bien connue, par mélange des poudres broyées avec les ingrédients usuels, tels que des plastifiants, des stabilisants thermiques, des matières de charge, des lubrifiants, des pigments. Habituellement, les plastisols de polymères du chlorure de vinyle contiennent de 35 à 120 et, de préférence, de 40 à 55 parties en poids de plastifiant pour 100 parties en poids de polymères du chlorure de vinyle.

La présente invention concerne également l'utilisation des polymères du chlorure de vinyle issus des latex plurimodaux produits selon la procédé de l'invention pour la formulation de plastisols.

L' exemple qui suit est destiné à illustrer le procédé selon l'invention.

Tous les essais sont réalisés dans un réacteur de laboratoire en acier inoxydable d'une contenance de 3,4 litres, muni d'une double enveloppe dans laquelle circule un fluide caloporteur et d'un agitateur à pales conventionnel en acier inoxydable.

### 1. Fabrication du latex d'ensemencement trimodal d'amorçage

### A. Latex de semence monomodal (diamètre moyen des particules élémentaires: 0,15-0,30 µm)

On introduit successivement dans le réacteur à température ambiante 1440 g d'eau déminéralisée et 0,0042 g de sulfate de cuivre, 5 aq.(soit, 42 ml d'une solution aqueuse à 0,1 g/l). On ferme le réacteur et on met l'agitateur en marche à 250 t/min. On fait ensuite deux fois le vide (à 130 mm de mercure absolus) et, entre les deux opérations, on balaie le réacteur à l'azote technique à la pression de 600 mm de mercure absolus. On introduit ensuite 1200 g de chlorure de vinyle et on porte progressivement la température du contenu du réacteur à 52°C. Au moment où on atteint 52°C, considéré comme le temps zéro de la polymérisation (t₀), on introduit 0,48 g de persulfate d'ammonium (soit 24 ml d'une solution aqueuse à 20 g/l). Après 15 minutes, on introduit 1,16 g d'ammoniac (soit 33 ml d'ammoniaque 2N). Entre t₀ + 1 heure et t₀ + 5h 15, on introduit progressivement 12 g de myristate d'ammonium (soit 109 ml d'une solution à 11 %). Après une chute de pression de 0,5 bar, on porte la température à 80°C. Cette température atteinte, on introduit à nouveau 1,16 g d'ammoniac. On réduit la vitesse d'agitation à 50 t/min et après avoir introduit de l'antimousse, on élimine le chlorure de vinyle résiduaire par dégazage et stripping sous ébullition.

On recueille 2780 g de latex monomodal de polychlorure de vinyle à 39,6 % de matières sèches en particules élémentaires dont le diamètre moyen (évalué par la méthode de photosédimentométrie) s'élève à 0,25 µm.

### B. Latex de semence monomodal (diamètre moyen des particules élémentaires: 0,45-0,60 µm)

On introduit successivement dans le réacteur 1700 g d'eau déminéralisée, 0,0035 g de sulfate de cuivre, 5 aq. (soit 35 ml d'une solution à 0,1 g/l) et 140 g de polychlorure de vinyle sous forme du latex provenant de l'étape 1.A. (soit 353 g de latex). La procédure est identique à celle décrite ci-dessus. La nature et la quantité des ingrédients de polymérisation mis en oeuvre sont reprises ci-dessous :
persulfate d'ammonium : 0,40 g
ammoniac(initial) : 1,07 g
myristate d'ammonium : 7 g
chlorure de vinyle : 1000 g
ammoniac(fin de polymérisation) : 1,07 g On recueille 3214 g de latex monomodal de polychlorure de vinyle à 33 % de matières sèches en particules élémentaires dont le diamètre moyen s'élève à 0,55 µm. Variante : Cette procédure consiste à fabriquer dans un seul et même réacteur un premier latex de semence monomodal dont les particules élémentaires présentent un diamètre moyen de 0,25 µm et, sans isoler ledit latex, à le grossir par polymérisation ultérieure d'une nouvelle quantité de chlorure de vinyle.

Dans une première étape, on polymérise dans des conditions identiques à celles décrites sous le point 1.A une quantité réduite de chlorure de vinyle, soit 150 g. La nature et la quantité des ingrédients de polymérisation mis en oeuvre sont reprises ci-dessous :
eau déminéralisée : 1845 g
persulfate d'ammonium : 0,615 g
ammoniac (initial) : 1,144 g

Après une chute de pression de 4 bars, on introduit 1080 g de chlorure de vinyle. 15 minutes après l'introduction du chlorure de vinyle, on introduit progressivement 9,84 g (soit 89.5 cm³ d'une solution à 11 %) de myristate d'ammonium. Après une chute de pression de 1 bar, on porte la température à 80°C, puis on introduit 1,144 g d'ammoniac. On réduit la vitesse d'agitation à 50 t/min, on introduit 7,5 g d'antimousse et on élimine le chlorure de vinyle non converti par dégazage et stripping sous ébullition.

On recueille 3170 g de latex monomodal à 35,7 % de matières séches en particules élémentaires dont le diamètre moyen s'élève à 0,55 µm.

### C. Latex de semence bimodal (diamètre moyen des deux familles de particules élémentaires : 0,15-0,30 µm et 0,85-1,20 µm)

On introduit dans le réacteur 70 g de polychlorure de vinyle sous la forme du latex produit selon l'une ou l'autre des variantes décrites sous le point I.B. dont les particules élémentaires présentent un diamètre moyen de 0,45-0,60 µm. Les conditions générales de la polymérisation (ensemencée) sont celles décrites sous le point I A. La nature et la quantité des ingrédients de polymérisation sont précisées ci-dessous.

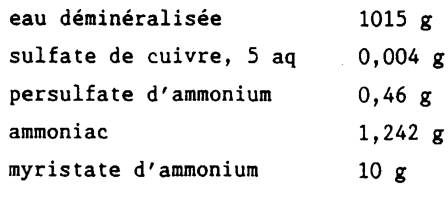

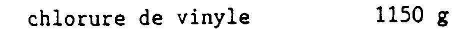

On recueille 2507 g de latex bimodal a 45 % de matières sèches à deux familles de particules élémentaires dont les diamètres moyens s'élèvent à 0,25 µm et 0,95 µm respectivement.

### D. Le latex d'ensemencement trimodal d'amorçage est obtenu par mélange de 2 parties en poids de latex monomodal produit sous le point 1.B. avec 1 partie en poids de latex bimodal produit sous le point 1.C.

### 2. Fabrication de latex trimodal par ensemencement au moyen du latex trimodal d'amorçage.

On introduit dans le réacteur 70 g de polychlorure de vinyle sous la forme du latex d'ensemencement produit sous le point 1.D.

Les conditions générales de polymérisation, la nature et la quantité des ingrédients de polymérisation, ainsi que la quantité de latex recueilli et sa concentration sont identiques à ceux de l'exemple 1.C.

Le latex trimodal produit est composé de trois familles de particules élémentaires dont les diamètres moyens sont compris entre 0,15-0,30 µm, 0,45-0,60 µm et 1,05-1,25 µm respectivement.

### 3. Fabrication de latex trimodal par ensemencement au moyen du latex trimodal provenant d'un cycle de polymérisation précédent.

On introduit dans le réacteur 70 g de polychlorure de vinyle sous la forme du latex obtenu sous le point 2.

Les conditions générales de polymérisation, la nature et la quantité des ingrédients de polymérisation, ainsi que la quantité de latex recueilli et sa concentration sont identiques à ceux de l'exemple 1.C.

Le latex trimodal produit est composé de trois familles de particules élémentaires dont les diamètres moyens sont compris entre 0,15-0,30 µm, 0,45-0,60 µm et 1,05-1,25 µm respectivement.

Une portion de 155 g du latex trimodal produit (soit 70 g de polychlorure de vinyle) est prélevée avant d'isoler le polymère en vue de servir de latex d'ensemencement dans un cycle de polymérisation suivant.

### 4. Séchage et broyage du latex trimodal.

Le latex trimodal produit sous le point 3. est séché dans un sécheur atomiseur dans lequel la température de l'air chaud s'élève à 175-200°C à l'entrée et à 75-85°C à la sortie. A la sortie du sècheur, on recupère le polychlorure de vinyle sec sous la forme d'une poudre constituée de cénosphères dont le diamètre moyen s'élève à 45 µm.

Le polychlorure de vinyle séché est ensuite broyé dans un broyeur à broches de manière à réduire le diamètre moyen des particules à 12 µm.

### 5. Préparation et évaluation d'un plastisol

On prépare un plastisol conformément à la norme ISO 4612 par mélange, dans un mélangeur planétaire, de 100 g de polychlorure de vinyle broyé produit sous le point 4. avec 40 g de phtalate de dioctyle (température : 23°C; vitesse d'agitation : 1 minute à 60 t/min, 19 min à 120 t/min) (Plastisol E).

A titre comparatif, on prépare un plastisol identique si ce n'est que le polychlorure de vinyle est issu du latex bimodal produit sous le point 1.C., séché et broyé dans les conditions précisées sous le point 4. (Plastisol C).

La viscosité initiale des deux plastisols est évaluée sur un viscosimètre rotatif conformément à la norme ISO 3219. Les résultats de l'évaluation de la viscocité initiale pour deux gradients de vitesse figurent dans le tableau ci-dessous.

**Tableau**

| Plastisol | Gradient de vitesse, sec -1 | Viscosité, Pa.s |
|---|---|---|
| E (exemple) | 1,4 | 17 |
| | 400 | 16 |
| C (comparatif) | 1,4 | 35 |
| | 400 | 32 |

## Revendications

1. Procédé de polymérisation en émulsion aqueuse ensemencée du chlorure de vinyle pour la production de latex plurimodaux de polymères du chlorure de vinyle dont les familles de particules élémentaires présentent des granulométries moyennes identiques à celles de la semence, caractérisé en ce qu'on initie la polymérisation en émulsion aqueuse du chlorure en présence d'émulsionnant en quantité inférieure à sa concentration micellaire critique et d'une semence constituée d'un latex plurimodal provenant d'un cycle de polymérisation précédent.

2. Procédé pour la production de latex plurimodaux de polymères du chlorure de vinyle suivant la revendication 1, caractérisé en ce que le taux d'ensemencement est compris entre 0,5 et 20 % en poids.

3. Procédé pour la production de latex plurimodaux de polymères du chlorure de vinyle suivant la revendication 2, caractérisé en ce que le taux d'ensemencement est compris entre 1 et 10 % en poids.

4. Procédé pour la production de latex plurimodaux de polymères du chorure de vinyle suivant l'une quelconque des revendication 1 à 3, caractérisé en ce que le latex d'ensemencement est consituée d'un latex trimodal.

5. Procédé pour la production de latex plurimodaux de polymères du chlorure de vinyle suivant la revendication 4, caractérisé en ce que le latex de semence trimodal comprend trois familles de particules élémentaires dont les diamètres moyens sont compris entre 0,15-0,30 µm, entre 0,45-0,60 µm et entre 1,05-1,25 µm respectivement.

6. Procédé pour la production de latex plurimodaux de polymères du chlorure de vinyle selon la revendication 5, caractérisé en ce que le latex de semence trimodal d'amorçage est produit par mélange dans des proportions pondérales de l'ordre de 2 pour 1 d'un latex monomodal dont les particules élémentaires présentent un diamètre moyen compris entre 0,45-0,60 µm avec un latex bimodal dont les deux familles de particules élémentaires présentent des diamètres moyens compris entre 0,15-0,30 µm et entre 0,85-1,20 µm respectivement.

7. Utilisation des polymères du chlorure de vinyle issus de latex plurimodaux de polymères du chlorure de vinyle produits suivant l'une quelconque des revendications 1 à 6 pour la formulation de plastisols.

## Patentansprüche

1. Verfahren der Polymerisation von Vinylchlorid in wäßriger geimpfter Emulsion für die Herstellung von plurimodalen Latices aus Polyvinylchlorid, deren Elementarteilchenfamilien mittlere Korngrößen aufweisen, die mit denjenigen der Saat identisch sind, dadurch gekennzeichnet, daß man die Polymerisation des Vinylchlorids in wäßriger Emulsion in Gegenwart eines Emulgators in einer Menge, die niedriger als seine kritische Micellenkonzentration ist, und einer Saat, die aus einem plurimodalen Latex besteht, welcher aus einem vorhergehenden Polymerisationszyklus stammt, einleitet.

2. Verfahren zur Herstellung von plurimodalen Latices aus Polyvinylchlorid gemäß Anspruch 1, dadurch gekennzeichnet, daß der Saatgehalt zwischen 0,5 und 20 Gew.-% liegt.

3. Verfahren zur Herstellung von plurimodalen Latices aus Polyvinylchlorid gemäß Anspruch 2, dadurch gekennzeichnet, daß der Saatgehalt zwischen 1 und 10 Gew.-% liegt.

4. Verfahren zur Herstellung von plurimodalen Latices aus Polyvinylchlorid gemäß einem der Ansprüche 1 bis 3, dadurch gekennzeichnet, daß der Saat-Latex aus trimodalem Latex besteht.

5. Verfahren zur Herstellung von plurimodalen Latices aus Polyvinylchlorid gemäß Anspruch 4, dadurch gekennzeichnet, daß der trimodale Saat-Latex drei Elementarteilchenfamilien umfaßt, deren mittlere Durchmesser zwischen 0,15 - 0,30 µm, zwischen 0,45-0,60 µm beziehungsweise zwischen 1,05-1,25 µm liegen.

6. Verfahren zur Herstellung von plurimodalen Latices aus Polyvinylchlorid gemäß Anspruch 5, dadurch gekennzeichnet, daß der trimodale Saat-Latex zum Impfen durch Mischen eines monomodalen Latex, dessen Elementarteilchen einen mittleren Durchmesser zwischen 0,45-0,60 µm aufweisen, mit einem bimodalen Latex, dessen zwei Elementarteilchenfamilien mittlere Durchmesser zwischen 0,15 - 0,30 µm beziehungsweise zwischen 0,85-1,20 µm aufweisen, in Gewichtsverhältnissen in der Größenordnung von 2 zu 1 hergestellt wird.

7. Verwendung der Vinylchloridpolymere, die aus den gemäß einem der Ansprüche 1 bis 6 hergestellten plurimodalen Latices aus Polyvinylchlorid hervorgegangen sind, für die Formulierung von Plastisolen.

## Claims

1. Process for the seeded aqueous emulsion polymerisation of vinyl chloride in order to produce multimodal latices of vinyl chloride polymers in which the classes of elementary particles have mean particle sizes identical to those of the seed, characterised in that the aqueous emulsion polymerisation of vinyl chloride is initiated in the presence of emulsifier in a quantity lower than its critical micelle concentration and of a seed consisting of a multimodal latex originating from a preceding polymerisation cycle.

2. Process for the production of multimodal latices of vinyl chloride polymers in accordance with Claim 1, characterised in that the seeding ratio is between 0.5 and 20% by weight.

3. Process for the production of multimodal latices of vinyl chloride polymers in accordance with Claim 2, characterised in that the seeding ratio is between 1 and 10% by weight.

4. Process for the production of multimodal latices of vinyl chloride polymers according to any one of Claims 1 to 3, characterised in that the seed latex consists of a trimodal latex.

5. Process for the production of multimodal latices of vinyl chloride polymers according to Claim 4, characterised in that the trimodal seed latex comprises three classes of elementary particles whose mean diameters are between 0.15-0.30 µm, between 0.45-0.60 µm and between 1.05-1.25 µm respectively.

6. Process for the production of multimodal latices of vinyl chloride polymers according to Claim 5, characterised in that the initiating trimodal seed latex is produced by mixing, in weight proportions of the order of 2 to 1, a monomodal latex whose elementary particles have a mean diameter of between 0.45-0.60 µm with a bimodal latex whose two classes of elementary particles have mean diameters of between 0.15-0.30 µm and between 0.85-1.20 µm respectively.

7. Use of the vinyl chloride polymers originating from multimodal latices of vinyl chloride polymers produced according to any one of Claims 1 to 6, for the formualtion of plastisols.
